# EUROPEAN PATENT APPLICATION

(11) **EP 4 213 099 A1**
(43) Date of publication of application: **19.07.2023**
(21) Application number: 22801949.3
(22) Date of filing: 29.09.2022
(51) Int. Cl.: G06T 11/20, G06F 16/29, G06T 3/40

(54) **MAP BUILDING METHOD, MAP BUILDING APPARATUS, VEHICLE, AND STORAGE MEDIUM**

(30) Priority: 02.12.2021 CN 202111458074
(71) Applicant: Guangzhou Xiaopeng Autopilot Technology Co., Ltd., Guangzhou, Guangdong 510000 (CN)
(72) Inventor: Liu, Zhongyuan, Guangzhou, Guangdong 510000 (CN); Li, Hongjun, Guangzhou, Guangdong 510000 (CN); Huang, Ya, Guangzhou, Guangdong 510000 (CN); Fan, Yunfeng, Guangzhou, Guangdong 510000 (CN); Gao, Xinyu, Guangzhou, Guangdong 510000 (CN); Jiang, Shaofeng, Guangzhou, Guangdong 510000 (CN); Guang, Xueling, Guangzhou, Guangdong 510000 (CN)
(74) Representative: Ran, Handong
(86) International application number: PCT/CN2022/122613
(87) International publication number: WO 2023/098272

(57) **Abstract**

The present disclosure provides a map building method, a map building apparatus, a vehicle, and a storage medium. The map building method includes: acquiring a first start position of a first parking route to be memorized when a vehicle initiates a route memory function; locating the first start position in a built first semantic map to obtain a first locating position of the first start position in the first semantic map; acquiring road semantic information along the first parking route collected by the vehicle while traveling along the first parking route; and building a second semantic map according to the first locating position and the road semantic information.

## Description

The present disclosure claims priority of Chinese patent application No. 202111458074.6 filed on December 02, 2021.

### Technical Field

The present disclosure relates to the field of map construction, and in particular to a map building method, a map building apparatus, a vehicle, and a storage medium.

### Background

At present, when a vehicle fails to find certain parking routes in a semantic map that has been built, it collects road semantic information along the parking routes through a sensor based on these parking routes. However, semantic maps newly built are significantly different from one another for some reasons, for example, incomplete road semantic information collected by the sensor, or different road semantic information for a same parking route at different periods. That is, a newly built semantic map is not accurate, causing a failure of parking when the vehicle calls the newly built semantic map for parking.

### Summary

The embodiments of the present disclosure provide a map building method, a map building apparatus, a vehicle, and a storage medium. Using a built first semantic map as a reference, the vehicle can build a more accurate second semantic map based on an acquired first start position and collected road semantic information along a first parking route, so that the vehicle can invoke the second semantic map for more successful parking.

According to a first aspect of the embodiments of the present disclosure, a map building method is provided, including:
acquiring a first start position of a first parking route to be memorized when a vehicle initiates a route memory function;
locating the first start position in a built first semantic map to obtain a first locating position of the first start position in the first semantic map;
acquiring road semantic information along the first parking route collected by the vehicle while traveling along the first parking route; and
building a second semantic map according to the first locating position and the road semantic information.

In an embodiment, building the second semantic map according to the first locating position and the road semantic information includes: setting the first locating position as an initial position of the second semantic map; and building the second semantic map based on the initial position and the road semantic information.

In an embodiment, before locating the first start position in the built first semantic map, the method further includes acquiring a first target position of the first parking route to be memorized; and, locating the first start position in the built first semantic map to obtain the first locating position of the first start position in the first semantic map, includes: locating the first start position in the first semantic map if the first target position is not in the built first semantic map, to obtain the first locating position of the first start position in the first semantic map.

In an embodiment, the method further includes: based on the first locating position, if there is an overlap between road semantic information of the first semantic map and road semantic information of the second semantic map, acquiring the overlapped road semantic information; and deleting the overlapped road semantic information from the first semantic map to obtain a first target semantic map, and integrating the first target semantic map with the second semantic map to obtain a third semantic map; or deleting the overlapped road semantic information from the second semantic map to obtain a second target semantic map, and integrating the second target semantic map with the first semantic map to obtain a fourth semantic map; or, if no road semantic information of the first semantic map overlaps with road semantic information of the second semantic map, setting the first locating position as a junction between the first semantic map and the second semantic map, and integrating the first semantic map with the second semantic map to obtain the fifth semantic map.

In an embodiment, the method further includes: responsive to a call instruction from a suer, obtaining a target semantic map, which contains a second parking route requested by the call instruction, from the first semantic map and the second semantic map according to a second start position and a second target position indicated in the call instruction; steering the vehicle from the second start position to the second target position along the second parking route according to road semantic information contained in the target semantic map.

In an embodiment, steering the vehicle from the second start position to the second target position along the second parking route according to the road semantic information contained in the target semantic map includes: determining target road semantic information corresponding to the second target position according to the road semantic information contained in the target semantic map; steering the vehicle from the second start position along the second parking route, and obtaining real-time road semantic information; and when the real-time road semantic information successfully matches the target road semantic information, steering the vehicle to park at the second target position.

In an embodiment, the second start position is stored when the vehicle is parked and powered off.

A second aspect of the embodiments of the present disclosure provides a map building apparatus that may include:
an acquisition module configured to acquire a first start position of a first parking route to be memorized when a vehicle initiates a route memory function; and
a processing module configured to locate the first start position in a built first semantic map to obtain a first locating position of the first start position in the first semantic map, wherein
the acquisition module is further configured to acquire road semantic information along the first parking route collected by the vehicle while traveling along the first parking route;
the processing module is further configured to build a second semantic map according to the first locating position and the road semantic information.

In an embodiment, the processing module is specifically configured to set the first locating position as an initial position of the second semantic map; and build the second semantic map based on the initial position and the road semantic information.

In an embodiment, the acquisition module is further configured to acquire a first target position of the first parking route to be memorized; and
the processing module is further configured to locate the first start position in the first semantic map if the first target position is not located in the built first semantic map, to obtain the first locating position of the first start position in the first semantic map.

In an embodiment, the acquisition module is further configured to, if there is an overlap between road semantic information of the first semantic map and road semantic information of the second semantic map, acquire the overlapped road semantic information;
the processing module is further configured to delete the overlapped road semantic information from the first semantic map to obtain a first target semantic map, and integrate the first target semantic map with the second semantic map to obtain a third semantic map; or delete the overlapped road semantic information from the second semantic map to obtain a second target semantic map, and integrate the second target semantic map with the first semantic map to obtain a fourth semantic map; or configured to, if no road semantic information of the first semantic map overlaps with road semantic information of the second semantic map, sett the first locating position as a junction between the first semantic map and the second semantic map, and integrate the first semantic map with the second semantic map to obtain the fifth semantic map.

In an embodiment, the processing module is further configured to, in response a call instruction from a user, obtain a semantic map, which contains a second parking route requested by the call instruction, from the first semantic map and the second semantic map according to a second start position and a second target position indicated in the call instruction; and steer the vehicle from the second start position to the second target position along the second parking route according to road semantic information contained in the target semantic map.

In an embodiment, the processing module is specifically configured to determine target road semantic information corresponding to the second target position according to the road semantic information contained in the target semantic map;
the acquisition module is specifically configured to steer the vehicle from the second start position along the second parking route and obtain real-time road semantic information; and
the processing module is specifically configured to steer the vehicle to park at the second target position when the real-time road semantic information successfully matches the target road semantic information.

In an embodiment, the second start position is stored when the vehicle is parked and powered off.

A third aspect of the embodiments of the present disclosure provides a map building apparatus that includes:
a memory having stored thereon executable program code; and
a processor coupled with the memory; wherein
the processor calls the executable program code stored in the memory and the executable program code is executed by the processor to perform the method according to the first aspect of the embodiments of the present disclosure.

A fourth aspect of the embodiments of the present disclosure provides a vehicle that includes the map building apparatus according to the second aspect or the third aspect of the embodiments of the present disclosure.

Another aspect of the embodiments of the present disclosure provides a computer-readable storage medium storing the executable program code which, when executed by a processor, results in performance of the method according to the first aspect of the embodiments of the present disclosure.

Another aspect of the embodiments of the present disclosure provides a computer program product which, when executed on a computer, results in performance of any method disclosed according to the first aspect of the embodiments of the present disclosure.

Another aspect of the embodiments of the present disclosure provides an application delivery platform for launching a computer program product that, when running on a computer, causes the computer to execute any method disclosed according to the first aspect of the embodiments of the present disclosure.

Given the foregoing technical solutions, the embodiments of the present disclosure have the following functions.

In the embodiments of the present disclosure, when the vehicle initiates the route memory function, the first start position of the first parking route to be memorized is acquired. The first start position in the built first semantic map is located to obtain the first locating position of the first start position in the first semantic map. The road semantic information along the first parking route collected by the vehicle while going along the first parking route is acquired. The second semantic map is built according to the first locating position and the road semantic information. That is, using the built first semantic map as a reference, the vehicle can build a more accurate second semantic map based on the acquired first start position and the collected road semantic information along the first parking route, so that the vehicle can invoke the second semantic map for more successful parking.

### Brief Description of Drawings

To illustrate the technical solutions of the examples of the present disclosure more clearly, the accompanying drawings needed for describing the embodiments and the prior art will be explained briefly. Evidently, the following accompanying drawings only describe some of the embodiments of the present disclosure, and other drawings can be obtained according to these drawings.
Fig. 1a is a schematic flowchart of a map building method according to an embodiment of the present disclosure;
Fig. 1b is a schematic diagram of an example of the built first semantic map according to an embodiment of the present disclosure;
Fig. 1c is a schematic diagram of an example of the second semantic map according to an embodiment of the present disclosure;
Fig. 1d is a schematic diagram of an example of the third semantic map according to an embodiment of the present disclosure;
Fig. 1e is a schematic diagram of an example of the fourth semantic map according to an embodiment of the present disclosure;
Fig. If is a schematic diagram of an example of the fifth semantic map according to an embodiment of the present disclosure;
Fig. 2 is another schematic flowchart of the map building method according to an embodiment of the present disclosure;
Fig. 3 is a structural schematic diagram of a map building apparatus according to an embodiment of the present disclosure;
Fig. 4 is another structural schematic diagram of the map building apparatus according to an embodiment of the present disclosure;
Fig. 5 is a structural schematic diagram of a vehicle according to an embodiment of the present disclosure.

### Detailed Description

The following will describe the technical solutions in the embodiments of the present disclosure clearly and completely with reference to the accompanying drawings. Evidently, the embodiments described below are only a part of the embodiments in the present disclosure. Any other embodiments obtained by ordinary persons skilled in the art based on the embodiments in the present disclosure without creative labor fall within the scope of the present disclosure.

It should be noted that the terms "include", "comprise", and any variants of such terms in the embodiments and the accompanying drawings aim to cover non-exclusive inclusions. For example, processes, methods, systems, products, or equipment comprising a series of steps or units should not be construed as limited to the listed steps or units, but optionally include steps or units that are not listed, or optionally include other steps or units intrinsic to these processes, methods, systems, products or equipment.

The present disclosure provides a map building method, a map building apparatus, a vehicle, and a storage medium. Using a built first semantic map as a reference, the vehicle can build a more accurate second semantic map based on an acquired first start position and collected road semantic information around a first parking route, so that the vehicle can invoke the second semantic map for more successful parking.

It should be noted that the embodiments of the method of the present disclosure can be implemented by the map building apparatus or the vehicle. The technical solutions of the present disclosure will be further illustrated by taking the vehicle as an example.

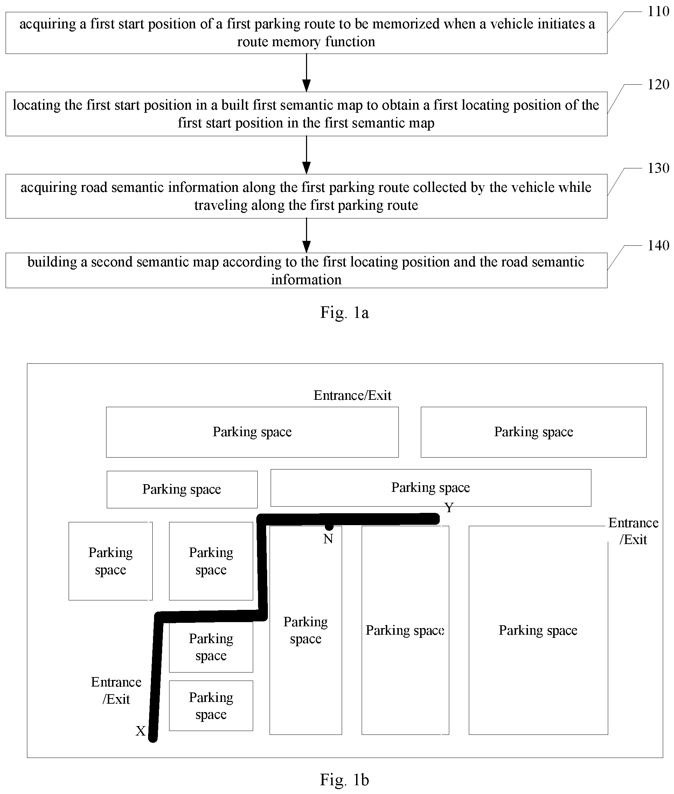

Referring to Fig. 1a. which shows a schematic flowchart of a map building method according to an embodiment of the present disclosure, the method may include steps 110 to 140.

At 110, a first start position of a first parking route to be memorized is acquired when a vehicle initiates a route memory function.

In some embodiments, the vehicle has already built and stored a plurality of semantic maps through the route memory function. However, due to limited map building ability of the vehicle, if the built semantic maps do not include a parking route requested by a user (such as the first parking route to be memorized), the vehicle initiates the route memory function and learns or memorizes the first parking route to be memorized. At this point, the vehicle can acquire a position in the first parking route to be memorized, which can be any position (such as the first start position).

It should be appreciated that the built semantic maps consist of memorized parking routes. Because road semantic information corresponding to parking routes in different semantic maps that are already built is different, the parking routes in the different semantic maps are also varied.

In an embodiment, the first start position can be a position in the first parking route stored during the last parking and power-off of the vehicle.

In an embodiment, the first parking route can be in an in-door parking lot or an outdoor parking lot. It is not limited herein.

In an embodiment, the vehicle initiating the route memory function may include: the vehicle initiating the route memory function in response to an operation from a user.

In an embodiment, the operation can be a key pressing action or voice action, which is not limited herein. It should be appreciated that whether the vehicle responds to the key pressing action or the voice action from the user, the purpose is for the user to invoke the route memory function of the vehicle easily, thereby building an improved semantic map.

At 120, the first start position in the built first semantic map is located to obtain a first locating position of the first start position in the first semantic map.

In an embodiment, there can be any number of built first semantic maps.

In an embodiment, the vehicle locates the first start position in the built first semantic map for obtaining the first locating position of the first start position in the first semantic map. This may include that the vehicle acquires road semantic information included in the first start position from the built first semantic map; the vehicle compares the road semantic information included in the first start position with the road semantic information included in the first semantic map; and if the comparison indicates a match, the vehicle locates the first start position to obtain the first locating position of the first start position in the first semantic map.

It should be appreciated that because the semantic map contains only road semantic information, when locating the first start position in the built semantic map, the vehicle determines the first locating position based on the road semantic information of the first start position.

Fig. 1b shows an example, which is a schematic diagram of an example of the built first semantic map according to an embodiment of the present disclosure. As shown in Fig. 1b, the first semantic map is a memorized parking route XY and the first start position in the first semantic map is point N.

At 130, road semantic information along the first parking route collected by the vehicle while traveling along the first parking route is acquired.

In an embodiment, the road semantic information along the first parking route may include but is not limited to at least one of the following: parking spaces, lane markings, speed bumps, sky, buildings, road surface, sidewalks, trees, models of vehicles, pedestrians, utility poles, and traffic signs. It should be appreciated that because there is various road semantic information, which is somewhat relevant, different routes has different road semantic information.

It should be appreciated that because the first semantic map already built in the vehicle does not include the first parking route to be memorized, the road semantic information in the first semantic map does not include the road semantic information along the first parking route either. In this case, it is necessary for the vehicle to enable the route memory function and collect the road semantic information along the first parking route, so that the vehicle can learn the first parking route in the later map building process.

At 140, a second semantic map is built according to the first locating position and the road semantic information.

It should be appreciated that each time when a second semantic map is built by the vehicle, it is based on the first semantic map. In this case, the second semantic maps that are built have minor deviations not only from each other but also from the first semantic map.

In an embodiment, the vehicle building the second semantic map according to the first locating position and the road semantic information may include that: the vehicle sets the first locating position as the initial position of the second semantic map; and the vehicle builds the second semantic map based on the initial position and the road semantic information.

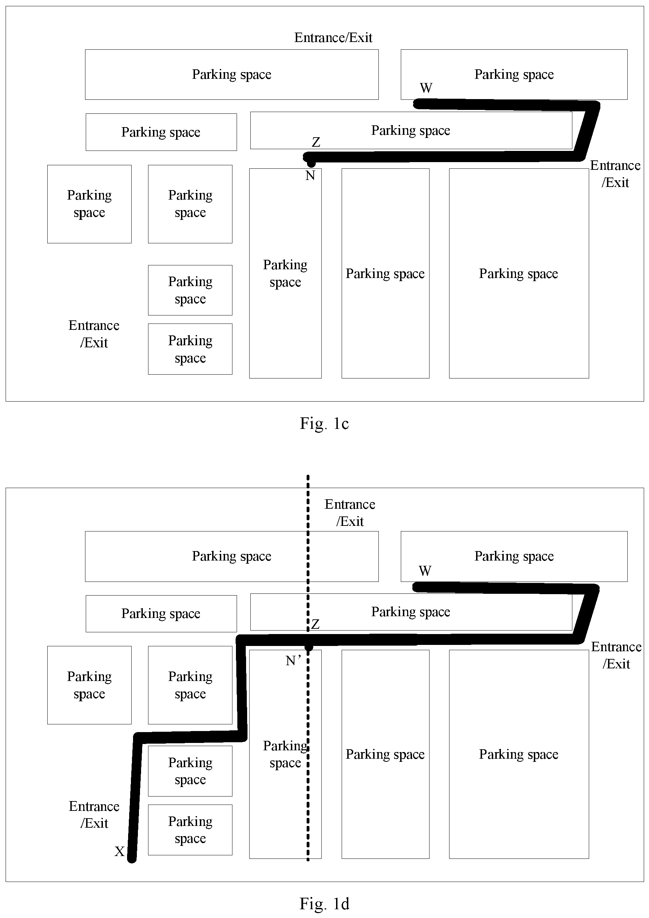

An example is illustrated in Fig. 1c, which shows a schematic diagram of an example of the second semantic map according to an embodiment of the present disclosure. As shown in Fig. 1c, the second semantic map is a memorized parking route ZW and the initial position Z of the second semantic map is point N' corresponding to the first locating position, that is, point Z coincides with point N'.

It should be appreciated that the building of the second semantic map by the vehicle is realized as the vehicle learns the parking route called by the user. Specifically, the vehicle can build and store the second semantic map based on the learned first parking route, so that the vehicle can directly invoke the second semantic map at a later time and achieve more successful parking.

In an embodiment, after step 140, the method can further include but is not limited to the following implementations.

Implementation 1: based on the first locating position, if there is an overlap between road semantic information of the first semantic map and road semantic information of the second semantic map share , the vehicle acquires the overlapped road semantic information. The vehicle then deletes the overlapped road semantic information from the first semantic map to obtain a first target semantic map, and integrates the first target semantic map with the second semantic map to obtain a third semantic map. Alternatively, the vehicle deletes the overlapped road semantic information from the second semantic map to obtain a second target semantic map, and integrates the second target semantic map with the first semantic map to obtain a fourth semantic map.

It should be appreciated that because the first locating position is both a position in the first semantic map and the initial position of the second semantic map and there is overlapped road semantic information between the first semantic map and the second semantic map, to save storage space, the vehicle can delete the overlapped road semantic information and build a complete third or fourth semantic map.

An example is illustrated in Fig. 1d, which shows a schematic diagram of an example of the third semantic map according to an embodiment of the present disclosure. As shown in Fig. 1d, the first semantic map is the memorized parking route XY, the second semantic map is the memorized parking route ZD, the first start position is the first locating position N' corresponding to point N , which may be any position along the memorized parking route XY, and the first locating position N' is the initial position Z of the second semantic map. The vehicle can delete the memorized parking route N'Y corresponding to the overlapped road semantic information from the first semantic map based on the first locating position N', to obtain the first target semantic map, which is the memorized parking route XZ. The second semantic map is complete. The vehicle integrates the first target semantic map with the second semantic map to obtain the third semantic map, which is the parking route XZW.

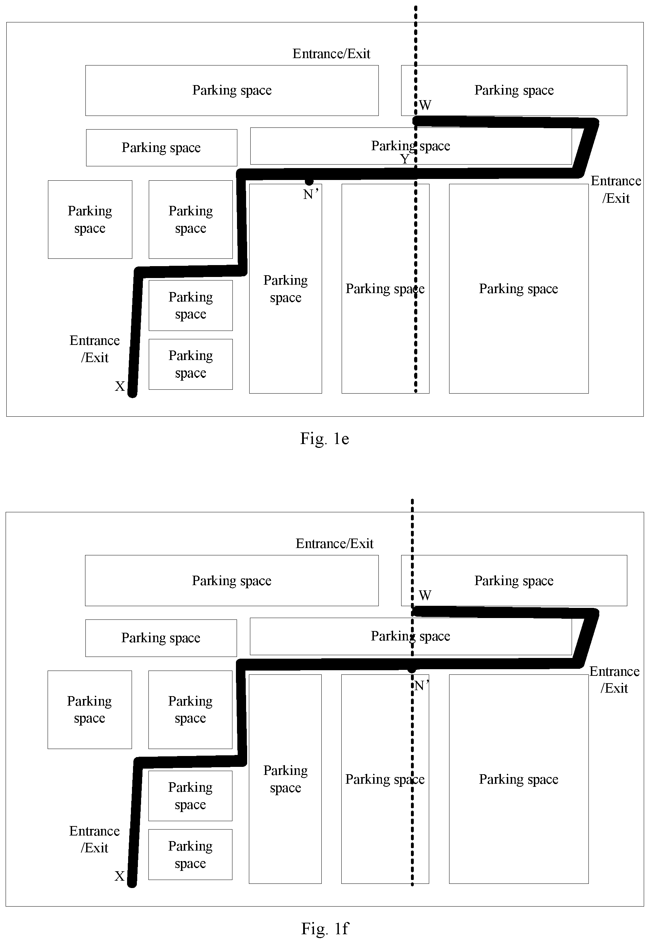

An example is illustrated in Fig. 1e, which shows a schematic diagram of an example of the fourth semantic map according to an embodiment of the present disclosure. As shown in Fig. 1e, the first semantic map is the memorized parking route XY, the second semantic map is the memorized parking route ZW, the first start position is the first locating position N' corresponding to point N , which may be any position along the memorized parking route XY, and the first locating position N' is the initial position Z of the second semantic map. The vehicle can delete the memorized parking route N'Y corresponding to the overlapped road semantic information from the second semantic map based on the first locating position N to, obtain the second target semantic map, which is the memorized parking route YW. The first semantic map is complete. The vehicle further integrates the second target semantic map with the first semantic map for obtaining the fourth semantic map, which is the parking route XYW.

It should be appreciated that in implementation 1, the vehicle deletes the overlapped road semantic information of the first semantic map and the second semantic map, forming a complete third semantic map and a complete fourth semantic map. Because the third semantic map is identical to the fourth semantic map, the vehicle can select any one of the approaches for semantic map building. In addition, these approaches can further save the storage space of the vehicle, thereby extending the service life of the battery.

Implementation 2: if there is no overlapped road semantic information in the first semantic map and the second semantic map, the first locating position is set as a junction of the first semantic map and the second semantic map, and the first semantic map and the second semantic map are integrated to form a fifth semantic map.

It should be appreciated that the first locating position is both a position in the first semantic map and the initial position of the second semantic map. In the meantime, the first semantic map and the second semantic map contain no overlapped road semantic information. In this case, both the first semantic map and the second semantic map are complete. The vehicle can use the first locating position as the junction between the first semantic map and the second semantic map so that it can integrate the first semantic map with the second semantic map and obtain a complete fifth semantic map.

An example is illustrated in Fig. 1f, which shows a schematic diagram of an example of the fifth semantic map according to an embodiment of the present disclosure. As shown in Fig. 1f, the first semantic map is the memorized parking route XY, the second semantic map is the memorized parking route ZW, the first start position is the first locating position N' corresponding to point N, which is the junction between the first semantic map and the second semantic map; wherein the first locating position N' is at point Y and is set as the initial position Z of the second semantic map. The vehicle can integrate the memorized parking route XY with the memorized parking route ZW to obtain the fifth semantic map, which is the parking route XN' W.

It should be appreciated that in implementations 1 and 2, the vehicle uses the first semantic map as a reference and then builds the second semantic map according to the first start position and the semantic information along the first parking route. The second semantic map built in this way is more accurate. That is, the deviation between the first semantic map and the second semantic map is minor. Therefore, any of the third, fourth, and fifth semantic map, that are built by the vehicle integrating the first semantic map with the second semantic map, has a higher accuracy.

Implementation 3: in response to a call instruction from a user, the vehicle obtains a target semantic map, which contains a second parking route indicated in the call instruction, from the first semantic map and the second semantic map according to a second start position and a second target position indicated in the call instruction. The vehicle is then steered to drive from the second start position to the second target position along the second parking route according to road semantic information contained in the target semantic map.

It should be appreciated that the vehicle builds many semantic maps, including the first semantic map and the second semantic map. The vehicle can determine the target semantic map amongst the saved semantic maps based on the second parking route in response to the user's call instruction, and park according to the target semantic map, that is, the vehicle is steered from the second start position to the second target position.

In an embodiment, the vehicle is controlled to drive from the second start position to the second target position along the second parking route according to the road semantic information contained in the target semantic map, which may include that: the vehicle determines road semantic information corresponding to the second target position according to the road semantic information contained in the target semantic map; the vehicle controls itself to drive from the second start position along the second parking route and obtains real-time road semantic information; and when the real-time road semantic information matches the target road semantic information, the vehicle stops at the second target position.

In an embodiment, the second start position may be stored when the vehicle stops and powers off. It should be appreciated that the second start position stored when the vehicle powers off can be set as the initial locating position of a next driving route when the vehicle powers on again, so that the user can acquire positioning information timely while diving.

In an embodiment, when the real-time road semantic information matches the target road semantic information, the vehicle stops at the second target position, which may include that: the vehicle matches the real-time road semantic information with the target road semantic information to obtain a matching score; and if the matching score is higher than a preset score threshold, the vehicle determines that the real-time road semantic information matches the target road semantic information, and the vehicle controls itself to stop at the second target position.

The preset score threshold can be set before delivery or can be set by a user according to experience. It is not limited herein.

It should be appreciated that if the real-time road semantic information fails to match the target road semantic information, the vehicle will go on along the second parking route until the real-time road semantic information successfully matches the target road semantic information.

For example, the preset score threshold is 95. The vehicle compares the real-time road semantic information with the target road semantic information, and the resulted matching score is 98, which is higher than 95. In this case, the vehicle determines that the real-time road semantic information matches the target road semantic information and stops at the second target position.

In an embodiment, in response to the user's call instructions, the vehicle uses the third semantic map, the fourth semantic map, or the fifth semantic map as the target semantic map, which includes the second parking route; and the vehicle steers itself to go from the second start position to the second target position along the second parking route according to the road semantic information in the target semantic map.

It should be appreciated that in implementation 3, while semantic maps are applied, the user may request the vehicle to go to any position in the semantic maps. Because the semantic maps are stored in the storage space of the vehicle, even if positioning signals of the Global Positioning System (GPS) cannot be detected, the vehicle can be located based on the semantic maps, thereby improving the positioning function of the vehicle.

Implementation 4: the vehicle outputs a message informing the user that the vehicle has completed building of the second semantic map.

In an embodiment, the vehicle outputting the message may include but is not limited to at least one of the following processes.

Process 1: the vehicle transmits the message to the onboard screen, which in turn displays the message in the form of words and/or animation.

In an embodiment, the message in the form of words and/or animation can be set up before delivery or can be customed by the user. It is not limited herein.

Process 2: the vehicle transmits the message to the speaker, which in turn broadcasts the message in the form of voice.

In an embodiment, the message in the form of voice can be set up before delivery or recorded by the user. It is not limited herein.

Process 3: the vehicle transmits the message to an electronic device connected to the vehicle, which in turn outputs the message.

In an embodiment, the electronic device connected to the vehicle can be a terminal device (such as a cell phone) or wearable device. It is not limited herein.

It should be appreciated that in implementation 4, whichever of the foregoing processes 1 to3 is applied, the purpose is for users to recognize the completion of building of the second semantic map.

In the embodiments of the present disclosure, when the vehicle initiates the route memory function, the first start position of the first parking route to be memorized is acquired. The first start position in the built first semantic map is located to obtain the first locating position of the first start position in the first semantic map. The road semantic information along the first parking route collected by the vehicle while going along the first parking route is acquired. The second semantic map is built according to the first locating position and the road semantic information. That is, using the built first semantic map as a reference, the vehicle can build a more accurate second semantic map based on the acquired first start position and the collected road semantic information around the first parking route, so that the vehicle can invoke the second semantic map for more successful parking.

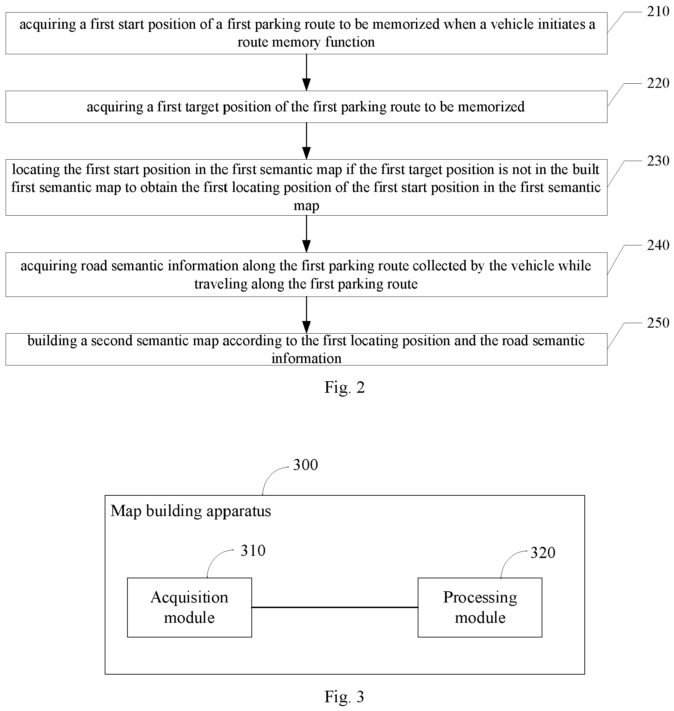

Referring to Fig. 2, which is another schematic flowchart of the map building method according to an embodiment of the present disclosure. The method may include steps 210 to 250.

At 210, when the vehicle initiates the route memory function, a first start position of a first parking route to be memorized is acquired.

It should be noted that step 210 is similar to step 110 of the embodiment of the present disclosure shown in Fig. 1 and will not be repeated.

At 220, a first target position of the first parking route to be memorized is acquired.

It should be appreciated that the first target position may be any position on the first parking route to be memorized. In an embodiment, the first target position can be set as the end position of the first parking route to be memorized.

At 230, if the first target position is not in the built semantic map, the first start position is located in the first semantic map to obtain the first locating position of the first start position in the first semantic map.

It should be appreciated that the first target position can be in the first semantic map or out of the first semantic map. If the first target position is located in the built first semantic map, it is unnecessary for the vehicle to build a new semantic map.

If the first target position is not located in the built semantic map, when the vehicle initiates the route memory function, it needs to learn road semantic information between the first start position and the first target position. For example, the first target position is point W in Fig. 1f.

At 240, while the vehicle is traveling along the first parking route, it collects and acquires road semantic information along the first parking route.

At 250, a second semantic map is built according to the first locating position and the road semantic information.

It should be noted that steps 240-250 are similar to steps 130-140 of the embodiments of the present disclosure shown in Fig. 1 and will not be repeated.

In the embodiments of the present disclosure, when the vehicle initiates the route memory function, the first start position of the first parking route to be memorized is acquired. If the first target position is not in the built semantic map, the first start position is located in the first semantic map to obtain the first locating position of the first start position in the first semantic map. While the vehicle is going along the first parking route, the road semantic information along the first parking route collected by the vehicle is acquired. The second semantic map is built according to the first locating position and the road semantic information. That is, using the built first semantic map as a reference, the vehicle can build a more accurate second semantic map based on the acquired first start position and the collected road semantic information along the first parking route, so that the vehicle can invoke the second semantic map for more successful parking.

Referring to Fig. 3, which is a structural schematic diagram of the map building apparatus according to an embodiment of the present disclosure, the map building apparatus 300 may include:
an acquisition module 310 configured to acquire a first start position of a first parking route to be memorized when a vehicle initiates a route memory function; and
a processing module 320 configured to locate the first start position in a built first semantic map to obtain a first locating position of the first start position in the first semantic map.

The acquisition module 310 is further configured to acquire road semantic information along the first parking route collected by the vehicle while traveling along the first parking route.

The processing module 320 is further configured to build a second semantic map according to the first locating position and said road semantic information.

In some embodiments of the present disclosure,
the processing module 320 is specifically configured to set the first locating position as an initial position of the second semantic map; and to build the second semantic map based on the initial position and the road semantic information.

In some embodiments of the present disclosure,
the acquisition module 310 is further configured to acquire a first target position of the first parking route to be memorized; and
the processing module 320 is further configured to locate the first start position in the first semantic map if the first target position is not in the built first semantic map, to obtain the first locating position of the first start position in the first semantic map.

In some embodiments of the present disclosure,
the acquisition module 310 is further configure to, if there is an overlap between road semantic information of the first semantic map and road semantic information of the second semantic map, acquire the overlapped road semantic information based on the first locating position; and
the processing module 320 is further configured to delete the overlapped road semantic information from the first semantic map to obtain a first target semantic map, and integrate the first target semantic map with the second semantic map to obtain a third semantic map; or delete the overlapped road semantic information from the second semantic map to obtain a second target semantic map, and integrate the second target semantic map with the first semantic map to obtain a fourth semantic map; or is further configured to, if no road semantic information of the first semantic map overlaps with road semantic information of the second semantic map, sett the first locating position as a junction of the first semantic map and the second semantic map, and integrate the first semantic map and the second semantic map to obtain a fifth semantic map.

In some embodiments of the present disclosure,
the processing module 320 is further configured to, responsive to a call instruction from a user, obtain a target semantic map, which contains a second parking route requested by the call instruction, from the first semantic map and the second semantic map according to a second start position and a second target position indicated in the call instruction; and steer the vehicle from the second start position to the second target position along the second parking route according to the road semantic information contained in the target semantic map.

In some embodiments of the present disclosure,
the processing module 320 is specifically configured to determine target road semantic information corresponding to the second target position according to the road semantic information contained in the target semantic map;
the acquisition module 310 is specifically configured to steer the vehicle from the second start position along the second parking route and obtain real-time road semantic information;
the processing module 320 is specifically configured to steer the vehicle to park at the second target position when the real-time road semantic information successfully matches the target road semantic information.

In an embodiment, the second start position is stored when the vehicle is parked and powered off.

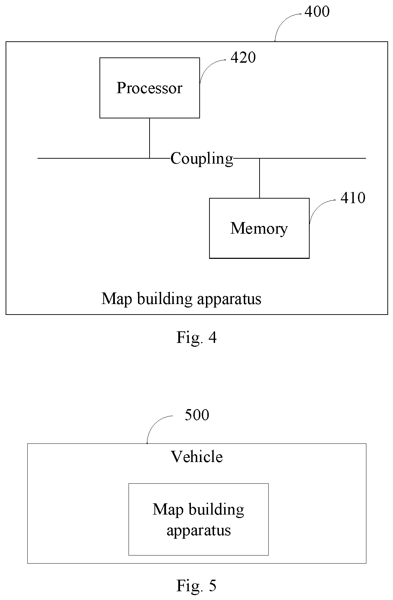

Referring to Fig. 4, which is another structural schematic diagram of the map building apparatus according to an embodiment of the present disclosure, the map building apparatus 400 may include:
a memory 410 storing executable program code; and
a processor 420 coupled with the memory 410, wherein
the processor 420 calls the executable program code stored in the memory 410 and executes any of the embodiments of the map building methods of the present disclosure.

Fig. 5 shows a structural schematic diagram of a vehicle according to an embodiment of the present disclosure. The vehicle 500 may include the map building apparatus according to Fig. 3 or Fig. 4.

The above embodiments can be carried out completely or partially through software, hardware, or any combination thereof. When software is applied, the embodiments can be carried out completely or partially in the form of a computer program product.

The computer program product includes one or more computer instructions. When the computer instructions are loaded and executed on a computer, all or part of the processes or functions described in the embodiments of the present disclosure are generated. The computer may be a general-purpose computer, special-purpose computer, computer network, or other programmable device. The computer instructions may be stored in a computer-readable storage medium or transmitted from one computer-readable storage medium to another. For example, the computer instructions may be transmitted from a website, computer, server, or data center to another website, computer, server, or data center in a wired (e.g., coaxial cable, fiber optic, digital subscriber line (DSL)) or wireless (e.g., infrared, wireless, microwave, etc.) manner. The computer-readable storage medium may be any accessible medium that can be used in a computer, or an integrated data storage apparatus such as a server or a data center that includes one or more accessible medium. The accessible medium may be magnetic media (e.g., floppy disks, hard disks, magnetic tapes), optical media (e.g., DVD), or semiconductor media (e.g., Solid State Disk (SSD)), etc.

Those skilled in the art can clearly understand that, for the convenience and brevity of description, the specific working process of the system, apparatus, and unit described above can refer to the corresponding process in the foregoing embodiments of the method, which will not be repeated here.

It should be appreciated that the system, apparatus, and method disclosed according to the embodiments of the present disclosure can be implemented in other ways. For example, the foregoing embodiments of the apparatus are only exemplary. The modules or units are arranged in terms of logical functions. There are other arrangements in actual implementation. For example, a plurality of units or modules can be combined or integrated into another system, or some features can be omitted or not executed. Moreover, the coupling between units or modules may be direct coupling or communication connection, or may be indirect coupling or communication connection through ports, devices, or units. The coupling may be in electrical, mechanical, or other forms.

The units illustrated as separate parts may or may not be physically separated, or the parts displayed as units may or may not be physical units. That is, the units can be located in one place, or distributed over a plurality of network elements. The embodiments of the present disclosure can be implemented using part or all of the units.

In addition, the functional units according to the embodiments of the present disclosure can be integrated into one processing unit, exist as separate physical units, or be integrated into one unit by two or more of the units. The integrated unit can be implemented in the form of a hardware or a software functional unit.

If the integrated unit is implemented as a software functional unit and sold or used as an independent product, it can be stored in a computer-readable storage medium. In view of such understanding, the fundamental, or the part that contributes to the prior art, or all or part of the technical solutions of the present disclosure can be implemented as a software product. The software product is stored in a storage medium and includes a variety of instructions that enable a computer (which can be a PC, a server, or a network device) to execute all or part of the steps of the method according to the embodiments of the present disclosure. The abovementioned storage medium can be selected from a variety of media that can store program code, including a USB flash drive, mobile hard disk drive, read-only memory (ROM), random access memory (RAM), diskette, or compact disc.

The above embodiments are only illustrated to explain the technical solutions of the present disclosure, but are not to be construed as limiting the present disclosure. Although the present disclosure has been described in detail with reference to the above embodiments, those skilled in the art should understand that they may make modifications to the technical solutions of the foregoing embodiments, or substitutions to partial technical features therein, without departing from the scope and spirit of the present disclosure.

## Claims

1. A map building method, comprising:
acquiring a first start position of a first parking route to be memorized when a vehicle initiates a route memory function;
locating the first start position in a built first semantic map to obtain a first locating position of the first start position in the first semantic map;
acquiring road semantic information along the first parking route collected by said vehicle while traveling along the first parking route; and
building a second semantic map according to said first locating position and said road semantic information.

2. The method according to claim 1, wherein building the second semantic map according to the first locating position and said road semantic information comprises:
setting said first locating position as an initial position of the second semantic map; and
building the second semantic map based on the initial position and said road semantic information.

3. The method according to claim 1 or claim 2, wherein before locating said first start position in the built first semantic map, said method further comprises:
acquiring a first target position of the first parking route to be memorized; and
wherein said locating said first start position in the built first semantic map to obtain the first locating position of the first start position in the first semantic map comprises:
locating said first start position in the first semantic map if said first target position is not in the built first semantic map, to obtain the first locating position of said first start position in the first semantic map.

4. The method according to claim 3, further comprising:
based on said first locating position, if there is an overlap between road semantic information of said first semantic map and road semantic information of said second semantic map, acquiring the overlapped road semantic information; and deleting said overlapped road semantic information from said first semantic map to obtain a first target semantic map, and integrating said first target semantic map with said second semantic map to obtain a third semantic map, or deleting the overlapped road semantic information from said second semantic map to obtain a second target semantic map, and integrating said second target semantic map with said first semantic map to obtain a fourth semantic map, or
if no road semantic information of said first semantic map overlaps with road semantic information of the second semantic map, setting said first locating position as a junction of said first semantic map and said second semantic map, and integrating said first semantic map and said second semantic map to obtain a fifth semantic map.

5. The method according to claim 3, further comprising:
responsive to a call instruction from a user, obtaining a target semantic map, containing a second parking route indicated in said call instruction, from said first semantic map and said second semantic map according to a second start position and a second target position indicated in said call instruction; and
steering said vehicle from said second start position to said second target position along said second parking route according to road semantic information contained in said target semantic map.

6. The method according to claim 5, wherein steering said vehicle from said second start position to said second target position along said second parking route according to the road semantic information contained in the target semantic map comprises:
determining target road semantic information corresponding to said second target position according to the road semantic information contained in said target semantic map;
steering said vehicle from said second start position along said second parking route and obtaining real-time road semantic information; and
when said real-time road semantic information successfully matches said target road semantic information, steering the vehicle to park at the second target position.

7. The method according to claim 5 or claim 6, wherein said second start position is stored when the vehicle is parked and powered off.

8. A map building apparatus, comprising:
an acquisition module, configured to acquire a first start position of a first parking route to be memorized when a vehicle initiates a route memory function; and
a processing module, configured to locate said first start position in a built first semantic map to obtain a first locating position of said first start position in said first semantic map,
wherein said acquisition module is further configured to acquire road semantic information along said first parking route collected by said vehicle while traveling along the first parking route;
said processing module is further configured to build a second semantic map according to said first locating position and said road semantic information.

9. A mapping apparatus, comprising a memory and a processor, said memory having stored thereon a computer program that, when executed by the processor, results in performance of the method according to any of claims 1-7

10. A vehicle, comprising a mapping apparatus according to claim 8 or claim 9.

11. A computer-readable storage medium having stored thereon a computer program which, when executed by a processor, results in performance of the method according to any of claims 1-7.
